# EUROPÄISCHE PATENTSCHRIFT

(11) **EP 1 411 095 B1**
(45) Veröffentlichungstag und Bekanntmachung des Hinweises auf die Patenterteilung: **26.04.2006**
(21) Anmeldenummer: 03022074.3
(22) Anmeldetag: 02.10.2003
(51) Int. Cl.: C09D 183/06, C08K 5/07

(54) **Verwendung von Photoinitiatoren vom Typ Hydroxyalkylphenon in strahlenhärtbaren Organopolysiloxanen für die Herstellung von abhäsiven Beschichtungen**
Use of hydroxyalkylphenon-type photoinitiators in irradiation curable organopolysiloxane compositions and antiadherent coatings
Application de photoinitiateurs du type hydroxyalkylphenone dans des compositions d'organopolysiloxanes durcissables par irradiation et revêtements antiadhérents

(30) Priorität: 15.10.2002 DE 10248111
(43) Veröffentlichungstag der Anmeldung: 21.04.2004
(73) Patentinhaber: Goldschmidt GmbH, 45127 Essen (DE)
(72) Erfinder: Brand, Mike, 45356 Essen (DE); Döhler, Hardi, 45525 Hattingen (DE); Hamann, Winfried, Dr., 45356 Essen (DE); Pomorin, Jürgen, 45309 Essen (DE)

(56) Entgegenhaltungen:
- EP-A- 0 780 712
- US-A- 4 347 111
- US-A- 4 721 734

## Beschreibung

Gegenstand der Erfindung ist die Verwendung von strahlenhärtbaren Beschichtungsmassen auf Basis von strahlungshärtenden Organopolysiloxanen mit (Meth)acrylsäureestergruppen zur Herstellung abhäsiver Beschichtungen, welche zur photoinduzierten Härtung Photoinitiatoren vom Typ Hydroxyalkylphenon enthalten.

Abhäsive Beschichtungsmassen (Trennmittel) werden in grösserem Umfang zur Beschichtung insbesondere von flächigen Materialien verwendet, um die Adhäsionsneigung von adhärierenden Produkten gegenüber diesen Oberflächen zu verringern.

Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Haftung der Klebeetiketten auf den Trägerfolien muss so hoch sein, dass bei der maschinellen Applikation von Etiketten, z.B. auf Gebinde, beim Lauf der mit den Etiketten versehenen Trägerfolien über Umlenkwalzen kein vorzeitiges Ablösen erfolgt. Andererseits müssen jedoch die Etiketten von der beschichteten Trägerfolie abziehbar sein, ohne dass ihre Klebkraft für die spätere Verwendung wesentlich beeinträchtigt wird. Dazu ist eine besonders gute Aushärtung der Silicontrennschicht erforderlich, da ansonsten Siliconbestandteile auf die Kleberoberfläche übergehen können und die Klebkraft reduzieren.

Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Eine weitere Anwendung von abhäsiven Beschichtungsmassen besteht in der Herstellung von Haftverschlüssen, wie z.B. bei sogenannten Höschenwindeln. Ist die Abhäsivität zu hoch, d.h. der Trennwert zu niedrig, bleibt die Windel nicht zuverlässig geschlossen. Ist die Abhäsivität zu niedrig und damit der Trennwert zu hoch, lässt sich der Verschluss nicht mehr ohne Zerreißen der Windel öffnen.

Die Darstellung von Organosiloxanen mit (Meth)acrylat-modifizierten organischen Gruppen, die über Si-O- und/oder über Si-C-Bindungen an die Siloxaneinheit gebunden sind, ist in zahlreichen Patentschriften beschrieben. Stellvertretend werden zum Stand der Technik die folgenden Patent- und Offenlegungsschriften genannt.

Organopolysiloxane, bei denen die (meth)acrylathaltigen organischen Gruppen über eine Si-O-C-Bindung mit dem Polysiloxangerüst verbunden sind, sind in der DE-C-27 47 233 und der DE-C-29 48 708 beschrieben.

Organopolysiloxane, bei denen die acrylesterhaltigen organischen Gruppen über Si-C-Bindungen mit dem Polysiloxangerüst verbunden sind, können z.B. dadurch hergestellt werden, dass man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung (meth)acrylat-modifizierter Polysiloxane mit Si-C-Verknüpfung der modifizierenden Gruppe(n) besteht darin, dass man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Des Weiteren ist es möglich, jeweils mehrere (Meth)acrylatgruppen pro Verbindungsglied an das Siloxangerüst zu binden. Um eine möglichst gute Vernetzung, das heißt, eine möglichst hohe Anzahl an reaktiven Gruppen, bei gleichzeitig so geringer Modifizierungsdichte am Siloxangerüst wie möglich zu erzielen, ist es wünschenswert, mehr als eine (Meth)acrylatgruppe je verbrückungsglied anzubinden. Solche Verfahren sind z.B. in der US 6 211 322 beschrieben.

Beispiele der genannten Organosiliciumverbindungen sind z.B. von der Firma Goldschmidt/Deutschland unter der Produktbezeichnung TEGO® RC, von Shin Etsu/Japan unter der Bezeichnung X-8010 und von Rhodia/Frankreich unter der Bezeichnung UV 900, UV 911 und UV 970 verfügbar.

Zur Herstellung der genannten Beschichtungen wird üblicherweise eine Mischung aus mehreren der genannten Organosiliciumverbindungen (und eines oder mehrerer Photoinitiatoren) auf flächige Träger aus Kunststoff, Metallen oder Papier aufgebracht und bahnförmig von Rolle zu Rolle bei hohen Anlagengeschwindigkeiten von mehreren hundert Metern pro Minute durch eine UV-Anlage geführt und gehärtet.

Im Gegensatz zu den genannten Organosiliziumverbindungen sind eine Vielzahl von rein organischen Verbindungen, d.h. ohne Silyl- oder Siloxaneinheit, bekannt, die zur radikalischen Polymerisation befähigte Doppelbindungen enthalten und durch UV-Strahlung nach Zusatz bekannter Photoinitiatoren aushärten. Diese Beschichtungsmassen werden z.B. für Druckfarben und zur Herstellung von Lackbindemitteln oder für die Beschichtung von Kunststoff-, Papier-, Holz- und Metalloberflächen eingesetzt.

Allen genannten Organosiliciumverbindungen und organischen Verbindungen ist gemeinsam, dass sie durch UV-Strahlung nach Zusatz von Photoinitiatoren in einer radikalischen Polymerisation in kürzester Zeit aushärten. Eine Übersicht über geeignete Photoinitiatoren ist in "J.P. Fouassier, Polymerization photoinitiators: Exited state process and kinetic aspects, Progress in Organic Coating, 18 (1990) 229-252", in "J.P. Fouassier, Photochemical reactivity of UV radical photoinitiators of polymerisation: A general discussion, Recent Res. Devel. Photochem. & Photobiol., 4(2000):51-74", in "D. Ruhlmann et al, Relations structure-proprietes dans les photoamorceurs de polymerisätion-2. Derives de Phenyl Acetophenone, Eur. Polym. J. Vol. 28, No. 3, pp. 287-292, 1992" und "K.K. Dietliker, Chemistry & Technology of UV & EB Formulation for Coatings, Inks & Paints, Volume 3, Sita Technology Ltd, UK" gegeben. In der DE-A-27 22 264 werden Hydroxyalkylphenone und ihre Verwendung als Photoinitiatoren beschrieben.

Diese Literaturstellen benennen Photoinitiatoren, unter anderem auch Photoinitiatoren vom Typ Hydroxyalkylphenon und bewerten ihre Reaktivität in den genannten organischen Verbindungen. Die Wirksamkeit von Photoinitiatoren ist von einer Vielzahl Faktoren abhängig, die im Wesentlichen auch von der photoreaktiven Gruppe und der Konzentration dieser Gruppe im Photoinitiatormolekül, also vom Verhältnis des Molgewichtes der reaktiven Gruppe zum Gesamtmolgewicht, abhängen. Auch das Molgewicht der radikalischen Spaltprodukte und damit des Photoinitiatormoleküls selbst, ist für die Wirksamkeit wichtig. Diese Zusammenhänge sind insbesondere für Photoinitiatoren vom Typ Hydroxyalkylphenon Stand der Technik.

Photoinitiatoren müssen in der Beschichtungsmasse außerdem löslich sein, um eine ausreichende Wirksamkeit bei der UV-Härtung zu erreichen. Durch die sehr hydrophobe Matrix der genannten Organosiliciumverbindungen ist im Gegensatz zu den organischen Verbindungen die Verwendung von sehr vielen bekannten Photoinitiatoren nicht möglich, da sie sich nicht in der Siliconmatrix verträglich lösen lassen. Besonders geeignete Photoinitiatoren für die genannten Organosiliciumverbindungen sind daher solche, die flüssig oder leicht schmelzbar sind und sich in der Siliconmatrix verträglich mischen.

Zur Verbesserung der Löslichkeit mit den genannten Organosiliciumverbindungen werden z.B. in WO-A-97/49768, US 5 776 658, US 4 391 963 und EP-B-0 088 842 mit Silylresten, insbesondere auch polymeren Silylresten, modifizierte Photoinitiatoren, z.B. vom Hydroxyketon-, Aminoketon-, Benzoinether-, Benzophenon- oder Thioxanton-Typ, vorgeschlagen. Auch in den Patenten US 4 356 265, US 4 534 838 und EP-B-0 162 572 sind die unterschiedlichsten mit Organopolysiloxanresten versehenen Photoinitiatorstrukturen beschrieben. Diese Verbindungen sind beispielsweise vom Dialkoxyacetophenon abgeleitet und weisen eine erhöhte Siliconlöslichkeit auf. US 4 507 187 offenbart Diketophotoinitiatoren mit Silylgruppen als in Silikonpolymeren gut lösliche Photoinitiatoren. Polymere Photoinitiatoren mit Siloxanresten sind in US 4 587 276 beschrieben. A. Kolar et al berichten in J.M.S. Pure Appl. Chem. A31(3) (1994), 305-318 über reaktive silylderivierte Hydroxyalkylphenon Photoinitiatoren. In der EP-A-1 072 326 werden siloxanmodifizierte Photoinitiatoren mit oberflächenaktiven Eigenschaften beschrieben, die ebenfalls Derivate des Hydroxyalkylphenon sind.

Die genannten Literaturstellen beschäftigen sich mit der Lösung des Problems der Löslichkeit von Photoinitiatoren in den genannten Organosiliciumverbindungen. Die Löslichkeit wird durch die Anbindung von teilweise polymeren Siloxanresten an die photoreaktive Gruppe erreicht. Diese Lösung hat zum Nachteil, dass die Konzentration der photoreaktiven Gruppe durch das hohe Molgewicht des Silyl- oder Siloxanrestes in dem Maße erniedrigt wird, in dem die Löslichkeit mit den genannten Organosiliciumverbindungen steigt. Solche Photoinitiatoren müssen zum Ausgleich der verringerten Konzentration der photoreaktiven Gruppe den genannten Organosiliciumverbindungen mit erhöhter Einsatzkonzentration zugemischt werden. Die zur Anbindung der Silyl- oder Siloxanreste nötigen Verfahrensschritte stellen außerdem einen zusätzlichen kostenerhöhenden Verfahrensschritt dar.

Es bestand daher ein Bedarf für die genannten Organosiliciumverbindungen einen einfach zugänglichen, leicht mischbaren und verträglichen Photoinitiator zu finden, der trotzdem mit einer hohen Konzentration an photoreaktiven Gruppen ausgestattet ist.

Überraschenderweise wurde gefunden, dass Photoinitiatoren vom Typ Hydroxyalkylphenon der allgemeinen Formel 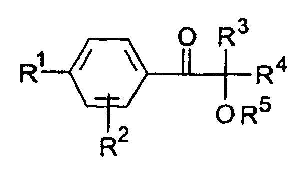 worin
- R¹: ein linearer oder verzweigter Alkylrest mit 3 bis 18 C-Atomen, vorzugsweise 4 bis 12 C-Atomen,
- R²: ein Alkylrest mit 1 bis 4 C-Atomen, vorzugsweise Wasserstoff,
- R³, R⁴: Alkylreste mit 1 bis 6 C-Atomen, die auch zu einem 5- oder 6-gliedrigen Kohlenstoffring verknüpft sein können oder einer dieser Reste auch Wasserstoff sein kann, und
- R⁵: ein Alkyl- oder Alkanoylrest, vorzugsweise wasserstoff ist,
in für die genannten Organosiliciumverbindungen besonders geeignete Photoinitiatoren darstellen.

Diese Photoinitiatoren sind an sich bekannt, haben sich jedoch als Photoinitiatoren für die genannten organischen Beschichtungsmassen nicht durchsetzen können, da durch die Reste R¹ und R² die Konzentration der photoreaktiven Gruppe deutlich reduziert wird und somit die Reaktivität gegenüber Verbindungen mit R¹, R² gleich Wasserstoff reduziert ist. Dementsprechend sind nur Verbindungen mit R¹, R², R⁵ gleich Wasserstoff und R³, R⁴ gleich Methyl (z.B. Darocur® 1173 der Ciba Additives) oder R¹, R², R⁵ gleich Wasserstoff und R³, R⁴ gleich Cyclohexyl (z.B. Irgacur® 184 der Ciba Additives) für die Verwendung in den genannten organischen Beschichtungsmassen verbreitet. Analoge Verbindungen mit R¹ gleich linearem oder verzweigtem Alkylrest mit C₃ bis C₁₈ sind in durch die um bis zu 80 % verringerte Konzentration der photoreaktiven Gruppe in organischen Beschichtungsmassen deutlich weniger reaktiv.

Bei der Verwendung der dieser Photoinitiatoren in Organosiliciumverbindungen wurde jedoch überraschenderweise eine deutlich verbesserte Reaktivität gefunden, ohne die Nachteile der mit Siloxanketten verknüpften Photoinitiatoren gemäß EP-A-1 072 326.

Ein Gegenstand der vorliegenden Erfindung ist daher die Verwendung strahlenhärtbarer Beschichtungsmassen, enthaltend mindestens ein strahlungshärtbares Organopolysiloxan mit (Meth)acrylsäureestergruppen und einen Photoinitiator, welche dadurch gekennzeichnet sind, dass als Photoinitiator mindestens eine Verbindung der allgemeinen Formel 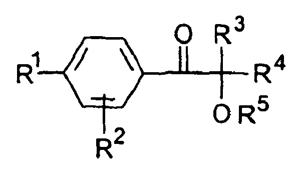 mitverwendet wird, worin
- R¹: ein linearer oder verzweigter Alkylrest mit 3 bis 18 C-Atomen, vorzugsweise 4 bis 12 C-Atomen,
- R²: ein Alkylrest mit 1 bis 4 C-Atomen, vorzugsweise Wasserstoff,
- R³, R⁴: Alkylreste mit 1 bis 6 C-Atomen, die auch zu einem 5- oder 6-gliedrigen Kohlenstoffring verknüpft sein können oder einer dieser Reste auch Wasserstoff sein kann, und
- R⁵: ein Alkyl- oder Alkanoylrest, vorzugsweise Wasserstoff bedeuten,
zur Herstellung abhäsiver Lacke, abhäsiver Überzüge, abhäsiver Beschichtungen.

Weitere Gegenstände der Erfindung sind durch die Ansprüche gekennzeichnet.

Die Photoinitiatoren können allein oder als Mischung miteinander, gegebenenfalls mit anderen nicht erfindungsgemäßen Photoinitiatoren und/oder Photosensibilisatoren, in Anteilen von vorzugsweise 0,01 bis 10 Gew.-%, insbesondere von 0,1 bis 5 Gew.-%, bezogen auf das Gewicht der acrylatfunktionellen Organopolysiloxane, mitverwendet werden.

Vorteile bei der UV-Härtung der genannten organomodifizierten Polysiloxane und der erfindungsgemäß mitverwendeten Photoinitiatoren gegenüber beispielsweise den an Siloxanketten chemisch gebundenen Hydroxyalkylphenonen gemäß EP-A-1 072 326 sind:
- Sehr geringe Zugabe der erfindungsgemäßen Photoinitiatoren möglich;
- Aushärtung der Produkte auf Trägermaterial mit deutlich erhöhter Geschwindigkeit;
- bessere Durchhärtung der erhaltenen abhäsiven Beschichtungen und damit einen geringeren Anteil an potentiell migrierfähigen Siliconbestandteilen, die auf den Kleber übergehen und die Klebereigenschaften verschlechtern können;
- Veränderungen der Abhäsivität ausgehärteter Produkte bei der Lagerung, erkennbar durch den Anstieg der Trennwerte, sind nicht oder nur in vernachlässigbarem Umfang gegeben.

Die erfindungsgemäßen härtbaren Mischungen können als strahlenhärtende Lacke, Überzüge, Beschichtungsmassen oder als Additive in solchen Systemen verwendet werden. Sie können in üblicher Weise mit anderen Härtungsinitiatoren, Photosensibilisatoren, Stabilisatoren, Antioxidationsmitteln, Füllstoffen, Pigmenten, anderen an sich bekannten Acrylatsystemen und weiteren üblichen Zusatzstoffen compoundiert werden. Stabilisatoren und Antioxidationsmittel sind insbesondere solche, die Sauerstoff fangen oder Peroxyde zersetzen können wie z.B. Phosphite, insbesondere Trialkylphosphite. Sie können dreidimensional durch freie Radikale vernetzt werden und härten unter Einfluss energiereicher Strahlung wie UV-Licht, innerhalb kürzester Zeit zu mechanisch und chemisch widerstandsfähigen Schichten aus.

### Beispiele:

Nachfolgende Beispiele sollen zur Verdeutlichung der Erfindung dienen, sie stellen jedoch keinerlei Einschränkung dar.

### Anwendungstechnische Überprüfung:

Zur Überprüfung der anwendungstechnischen Eigenschaften der härtbaren Mischungen werden die erfindungsgemäßen Mischungen sowie die nicht erfindungsgemäßen Vergleichsbeispiele nach Zugabe des jeweiligen Photoinitiators auf flächige Träger (orientierte Polypropylenfolie) aufgetragen und durch Einwirkung von UV-Licht einer dem Stand der Technik entsprechenden Mitteldruckquecksilberdampflampe mit einer UV-Leistung von 50 W/cm unter Stickstoffinertisierung mit kontrolliertem Restsauerstoffgehalt von < 50 ppm bei der Bahngeschwindigkeit vom 200 m/min gehärtet. Die Auftragsmenge beträgt in jedem Fall ca. 1 g/m².

### Trennwert:

Für die Ermittlung der Trennwerte wird ein 25 mm breites Klebeband, dass mit einem Kautschukleber beschichtet ist und als TESA® 7476 im Handel von der Firma Beiersdorf erhältlich ist verwendet.

Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180 ° vom Untergrund abzuziehen. Diese Kraft wird als Trennkraft oder Trennwert bezeichnet. Die allgemeine Testprozedur entspricht im wesentlichen der Testmethode Nr. 10 der "Fédération Internationale des Fabricants et Transformateurs D'Adhésifs et Thermocollants sur Papier et autres Supports" (FINAT).

### Loop-Test:

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf 3 mal auf den Untergrund aufgewalzt und sofort wieder von Hand abgezogen. Dann wird durch Zusammenlegen der Enden des Klebebandes eine Schlaufe gebildet, so dass die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft:

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180 ° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben. Werte über 80 % gelten dem Fachmann als ausreichend und sprechen für eine gute Aushärtung.

### Strahlenhärtende Organosiliziumverbindungen:

Als strahlenhärtende Organosiliziumverbindungen werden Produkte der Firma Goldschmidt, die unter der Bezeichnung TEGO® RC erhältlich sind, eingesetzt. Das Produkt TEGO® RC 902 (gemäß US-6 211 322) hat in der gehärteten Beschichtung eine sehr gute abhäsive Wirkung gegen klebende Substanzen. Der Gehalt an zur Polymerisation befähigten Doppelbindungen ist sehr gering. TEGO® RC 902 wird zur Verbesserung der Haftung zum Untergrund mit TEGO® RC 711 (gemäß DE-A-38 20 294) abgemischt. TEGO® RC 711 hat einen höheren Gehalt an zur Polymerisation befähigten Doppelbindungen und somit, wenn für sich allein beschichtet, in der gehärteten Beschichtung auch eine geringere Abhäsivität gegen klebende Substanzen. Als Beispiel der genannten strahlenhärtenden Organosiliziumverbindungen wird eine Mischung aus RC 902/RC 711 im Verhältnis 70 : 30 hergestellt und mit Photoinitiator gemäß Beispiel vermischt.

### Verwendete Photoinitiatoren:

Die erfindungsgemäß mitverwendeten Photoinitiatoren sowie die Vergleichsbeispiele enthalten als photoreaktive Gruppe das Molekülteil

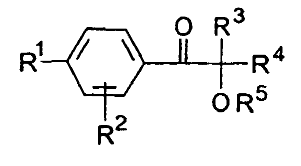

Photoinitiator Nr. 3
mit
R¹, R² = H;
R³, R⁴ = CH₃ ;
R⁵ = H
und kann daher als Referenz für den Anteil der photoreaktiven Gruppe im Photoinitiator angesehen werden. Dieser Anteil kann demnach durch das Verhältnis (Molgewicht Photoinitiator Nr. 3 mal Anzahl an reaktiven Gruppen im Molekül) geteilt durch (Molgewicht des betrachteten Photoinitiators) ausgedrückt werden.

Photoinitiatoren stellen einen hohen Kostenfaktor dar. Hohe Zugaben an Photoinitiator kann zudem die Trenneigenschaften negativ beeinflussen. Daher soll der Photoinitiator bei möglichst geringen Konzentrationen zugegeben werden. In der Praxis haben sich Mengen von ca. 2 Gew.-% Photoinitiator Nr. 3, bezogen auf härtbares Polymer, bewährt. Die Beurteilung der anwendungstechnischen Eigenschaften in den Beispielen orientieren sich also an dieser Einsatzmenge.

### Photoinitiator Nr. 1:

Erfindungsgemäßer Photoinitiator 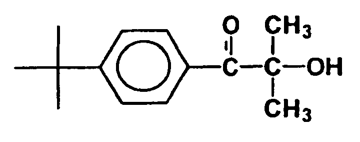 R¹ = tert. Butyl;
R² = H ;
R³, R⁴ = CH₃;
R⁵ = H
mit einem Molgewicht von 220 g/Mol; Anteil photoreaktive Gruppe: 0,75.

### Photoinitiator Nr. 2:

Erfindungsgemäßer Photoinitiator 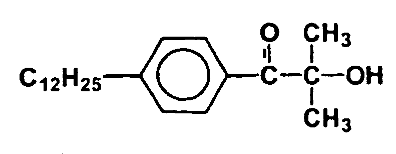 mit
R¹ = C₁₂H₂₅;
R² = H;
R³, R⁴ = CH₃ ;
R⁵ = H
und einem mittlerem Molgewicht von 330 g/Mol.
Der Alkylrest R¹ hat herstellungsbedingt eine Homologenverteilung von C₉H₁₉ bis C₁₅H₃₁ mit einem Maximum bei C₁₂H₂₅. Die Alkylreste sind jeweils eine Mischung aus linearem und verzweigtem Alkyl; Anteil photoreaktive Gruppe: 0,5.

### Photoinitiator Nr. 3:

Nicht erfindungsgemäßer Photoinitiator 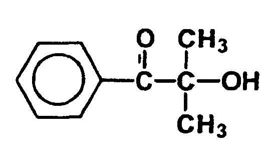 mit
R¹, R² = H;
R³, R⁴= CH₃;
R⁵ = H
als Basis-Vergleich.
Die Verbindung ist als Handelsprodukt der Firma Ciba Additives unter der Bezeichnung Darocur® 1173 verfügbar. Dieser Photoinitiator hat ein Molgewicht von 164,2 g/Mol; Anteil photoreaktive Gruppe definitionsbedingt 1.

### Photoinitiator Nr. 4:

Nicht erfindungsgemäßer Photoinitiator gemäß EP-A-1 072 326 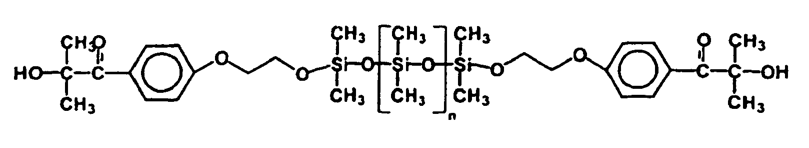 mit
R² = H;
R³, R⁴ = CH₃;
R⁵ = H
n im Mittel = 7
und einem mittleren Molgewicht von etwa 1.100 g/Mol; Anteil photoreaktive Gruppe: 0,3

### Versuchsserie 1:

In dieser Versuchsserie wurde die Zugabemenge der jeweiligen Photoinitiatoren so berechnet, dass die Konzentration an photoreaktiver Gruppe in den strahlenhärtenden Organosiliziumverbindungen in allen Beispielen gleich ist.

| Beispiel | Photoinitiator | Anteil photoreaktive Gruppe in der Mischung strahlen härtenden Organosiliziumverbindungen % | Zugabe Photoinitiator in Gew.-% | Restsauerstoff bei der UV-Härtung ppm |
|---|---|---|---|---|
| 1 | Nr. 1 | 2 | 2,67 | 25 |
| 2 | Nr. 2 | 2 | 4 | 25 |
| 3 | Nr. 3 | 2 | 2 | 25 |
| 4 | Nr. 4 | 2 | 6,67 | 25 |

### Anwendungstechnische Prüfung der Versuchsserie 1:

| Beispiel | Loop Test^{*)} | Restklebkraft % | Trennwert nach 24 Stunden TESA® 7476 cN/2,5 cm |
|---|---|---|---|
| 1 | + | 96 | 45 |
| 2 | + | 97 | 46 |
| 3 | - | 57 | 40 |
| 4 | - | 63 | 42 |

| | | | |
|---|---|---|---|
| ^{*)} + = Test bestanden; - = Test nicht bestanden | | | |

Aus diesen Beispielen ist ersichtlich, dass bei gleicher Konzentration der photoreaktiven Gruppe die erfindungsgemäßen Photoinitiatoren gegenüber dem Vergleich eine deutlich bessere Härtung der Siliconmasse ermöglichen.

### Versuchsserie 2:

In dieser Versuchsserie wurde die Zugabemenge der jeweiligen Photoinitiatoren auf jeweils 2 Gewichtsprozent festgelegt. Dadurch ergeben sich unterschiedliche Konzentrationen an photoreaktiver Gruppe in den strahlenhärtenden Organosiliziumverbindungen.

| Beispiel | Photoinitiator | Anteil photoreaktive Gruppe in der Mischung strahlenhärtenden Organosiliziumverbindungen % | Zugabe Photoinitiator in Gew.-% | Restsauerstoff bei der UV-Härtung ppm |
|---|---|---|---|---|
| 5 | Nr. 1 | 1,5 | 2 | 25 |
| 6 | Nr. 2 | 1 | 2 | 25 |
| 7 | Nr. 3 | 2 | 2 | 25 |
| 8 | Nr. 4 | 0,6 | 2 | 25 |

### Anwendungstechnische Prüfung der Versuchsserie 2:

| Beispiel | Loop Test^{*)} | Restklebkraft % | Trennwert nach 24 Stunden TESA® 7476 cN/ 2,5 cm |
|---|---|---|---|
| 5 | + | 91 | 51 |
| 6 | + | 90 | 53 |
| 7 | - | 57 | 40 |
| 8 | - | 42 | 41 |

| | | | |
|---|---|---|---|
| ^{*)} + = Test bestanden; - = Test nicht bestanden | | | |

Aus diesen Beispielen wird überraschenderweise deutlich, dass bei gleicher Einwaage des jeweiligen Photoinitiators (also unterschiedlicher Konzentration der photoreaktiven Gruppe) die erfindungsgemäßen Photoinitiatoren gegenüber dem Vergleich Photoinitiator Nr. 3 weiterhin eine deutlich bessere Härtung der Siliconmasse ermöglichen und gegenüber dem Vergleich Photoinitiator Nr. 5 sogar eine noch bessere Härtung ermöglichen.

## Patentansprüche

1. Verwendung strahlenhärtbarer Beschichtungsmassen, enthaltend mindestens ein strahlungshärtbares Organopolysiloxan mit (Meth)acrylsäureestergruppen und einen Photoinitiator, **dadurch gekennzeichnet, dass** als Photoinitiator mindestens eine Verbindung der allgemeinen Formel 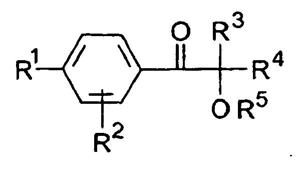 mitverwendet wird, worin
R¹ ein linearer oder verzweigter Alkylrest mit 3 bis 18 C-Atomen
R² H oder ein Alkylrest mit 1 bis 4 C-Atomen,
R³, R⁴ H oder Alkylreste mit 1 bis 6 C-Atomen, die auch zu einem 5- oder 6-gliedrigen Kohlenstoffring verknüpft sein können und
R⁵ H oder ein Alkyl- oder Alkanoylrest bedeuten,
zur Herstellung abhäsiver Lacke, abhäsiver Überzüge, abhäsiver Beschichtungen.

2. Verwendung strahlenhärtbarer Beschichtungsmassen gemäß Anspruch 1, **dadurch gekennzeichnet, dass** eine Verbindung der allgemeinen Formel mitverwendet wird worin R¹ ein linearer oder verzweigter Alkylrest mit 4 bis 12 C-Atomen ist.

3. Verwendung strahlenhärtbarer Beschichtungsmassen gemäß den Ansprüchen 1 bis 2, **dadurch gekennzeichnet, dass** eine Verbindung der allgemeinen Formel mitverwendet wird worin R², R⁵ = H sind.

4. Verwendung strahlenhärtbarer Beschichtungsmassen gemäß den Ansprüchen 1 bis 3, **dadurch gekennzeichnet, dass** eine Verbindung der allgemeinen Formel mitverwendet wird worin R³, R⁴ = CH₃ sind.

5. Verwendung strahlenhärtbarer Beschichtungsmassen gemäß den Ansprüchen 1 bis 4, **dadurch gekennzeichnet, dass** der Photoinitiator gemäß der allgemeinen Formel in Mengen von 0,01 bis 10 Gew.-%, bezogen auf das Gewicht der acrylatfunktionellen Siliconkomponente, mitverwendet wird.

6. Verwendung strahlenhärtbarer Beschichtungsmassen gemäß den Ansprüchen 1 bis 5, **dadurch gekennzeichnet, dass** mindestens ein Photoinitiator gemäß der allgemeinen Formel in Mischung mit nicht erfindungsgemäßen Photoinitiatoren und/oder Photosensibilisatoren in Mengen von 0,1 bis 5 Gew.-%, bezogen auf das Gewicht der acrylatfunktionellen Siliconmassen, mitverwendet wird.

7. Verwendung strahlenhärtbarer Beschichtungsmassen gemäß den Ansprüchen 1 bis 6, **dadurch gekennzeichnet, dass** sie mit Stabilisatoren, Füllstoffen, Pigmenten, anderen an sich bekannten Acrylatsystemen und weiteren üblichen Zusatzstoffen compoundiert werden.

## Claims

1. Use of radiation-curable coating compositions comprising at least one radiation- curable organopolysiloxane having (meth)acrylic ester groups and a photoinitiator, **characterized in that** said photoinitiator includes at least one compound of the general formula 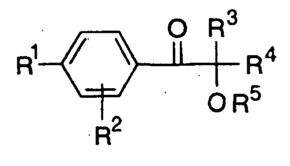 in which
R¹ is a linear or branched alkyl radical having 3 to 18 carbon atoms,
R² is H or an alkyl radical having 1 to 4 carbon atoms,
R³, R⁴ are H or alkyl radicals having 1 to 6 carbon atoms, which may also have been linked to form a 5- or 6-membered carbon ring, and
R⁵ is H or an alkyl or alkanoyl radical,
for preparing abhesive coating materials and producing abhesive coatings.

2. Use of radiation-curable coating compositions according to Claim 1, **characterized in that** a compound of the general formula is used in which R¹ is a linear or branched alkyl radical haying 4 to 12 carbon atoms.

3. Use of radiation-curable coating compositions according to Claim 1 or 2, **characterized in that** a compound of the general formula is used in which R², R⁵ = H.

4. Use of radiation-curable coating compositions according to any of Claims 1 to 3, **characterized in that** a compound of the general formula is used in which R³, R⁴ = CH₃.

5. Use of radiation-curable coating compositions according to any of Claims 1 to 4, **characterized in that** the photoinitiator of the general formula is used in amounts of from 0.01 to 10% by weight, based on the weight of the acrylate-functional silicone component.

6. Use of radiation-curable coating compositions according to any of Claims 1 to 5, **characterized in that** at least one photoinitiator of the general formula is used in a mixture with noninventive photoinitiators and/or photosensitizers in amounts of from 0.1 to 5% by weight, based on the weight of the acrylate-functional silicone compositions.

7. Use of radiation-curable coating compositions according to any of Claims 1 to 6, **characterized in that** they are compounded with stabilizers, fillers, pigments, other conventional acrylate systems, and further, customary additives.

## Revendications

1. Utilisation de masses de revêtement durcissables par des rayons, contenant au moins un organopolysiloxane durcissable par des rayons avec des groupements ester de l'acide (méth)acrylique et un photo-initiateur, **caractérisée en ce qu'**on utilise conjointement comme photo-initiateur au moins un composé de formule générale 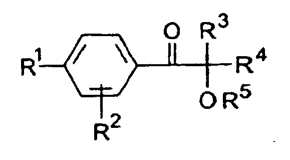 dans laquelle
R¹ signifie un radical alkyle linéaire ou ramifié, comprenant 3 à 18 atomes de carbone
R² signifie H ou un radical alkyle comprenant 1 à 4 atomes de carbone
R³, R⁴ signifient H ou des radicaux alkyle comprenant 1 à 6 atomes de carbone, qui peuvent également être liés en un cycle carboné de 5 ou 6 chaînons et
R⁵ signifie H ou un radical alkyle ou alcanoyle,
pour la préparation de laques anti-adhésives, de recouvrements anti-adhésifs, de revêtements anti-adhésifs.

2. Utilisation de masses de revêtement durcissables par des rayons selon la revendication 1, **caractérisée en ce qu'**un composé de formule générale est utilisé conjointement, dans laquelle R¹ représente un radical alkyle linéaire ou ramifié comprenant 4 à 12 atomes de carbone.

3. Utilisation de masses de revêtement durcissables par des rayons selon les revendications 1 à 2, **caractérisée en ce qu'**on utilise conjointement un composé de formule générale dans laquelle R², R⁵ = H.

4. Utilisation de masses de revêtement durcissables par des rayons selon les revendications 1 à 3, **caractérisée en ce qu'**on utilise conjointement un composé de formule générale dans laquelle R³, R⁴ = CH₃.

5. Utilisation de masses de revêtement durcissables par des rayons selon les revendications 1 à 4, **caractérisée en ce que** le photo-initiateur selon la formule générale est utilisé conjointement en des quantités de 0,01 à 10% en poids, par rapport au poids du composant silicone à fonctionnalité acrylate.

6. Utilisation de masses de revêtement durcissables par des rayons selon les revendications 1 à 5, **caractérisée en ce qu'**on utilise conjointement au moins un photo-initiateur de formule générale en mélange avec des photo-initiateurs non conformes à l'invention et/ou des agents de photo-sensibilisation en des quantités de 0,1 à 5% en poids, par rapport au poids des masses de silicone à fonctionnalité acrylate.

7. Utilisation de masses de revêtement durcissables par des rayons selon les revendications 1 à 6, **caractérisée en ce qu'**elles sont compoundées avec des stabilisateurs, des charges, des pigments, d'autres systèmes d'acrylate connus en soi et d'autres additifs usuels.
